# EUROPÄISCHE PATENTSCHRIFT

(11) **EP 0 824 508 B1**
(45) Veröffentlichungstag und Bekanntmachung des Hinweises auf die Patenterteilung: **24.01.2001**
(21) Anmeldenummer: 96914179.5
(22) Anmeldetag: 03.05.1996
(51) Int. Cl.: C04B 22/00, C04B 22/16, C04B 28/06, C01F 7/76

(54) **MATERIAL MIT GUTEN BRANDSCHUTZEIGENSCHAFTEN UND VERFAHREN ZUR HERSTELLUNG DESSELBEN**
MATERIAL WITH GOOD FIRE-PROTECTING PROPERTIES AND PROCESS FOR PRODUCING THE SAME
MATERIAU AYANT DE BONNES PROPRIETES PARE-FEU ET SON PROCEDE DE FABRICATION

(30) Priorität: 11.05.1995 DE 19517267
(43) Veröffentlichungstag der Anmeldung: 25.02.1998
(73) Patentinhaber: REDCO N.V., 1880 Kapelle op den Bos (BE)
(72) Erfinder: ANTON, Octavian, B-1020 Brüssel (BE); JACOPS, Joris, B-2812 Mechelen (BE); OPSOMMER, Ann, B-1800 Koningslo (BE)
(74) Vertreter: Werner, Hans-Karsten, Dr.Dipl.-Chem.
(86) Internationale Anmeldenummer: EP9601852
(87) Internationale Veröffentlichungsnummer: WO9635649

(56) Entgegenhaltungen:
- EP-A- 0 453 947
- DE-A- 3 319 017
- GB-A- 2 083 088
- CHEMICAL ABSTRACTS, vol. 84, no. 18, 3.Mai 1976 Columbus, Ohio, US; abstract no. 126070a, KUROHA KENJI ET AL.: "gypsum product with improved waterproofness and flame resistance" XP000152115 & JP,A,75 156 536 (TAISEI CONSTRUCTION)
- CHEMICAL ABSTRACTS, vol. 82, no. 18, 5.Mai 1975 Columbus, Ohio, US; abstract no. 115449p, FUJI MASANOBU ET AL.: "refractory gypsum product" XP002011402 & JP,A,74 121 827 (TASEI CONSTRUCTION)
- CHEMICAL ABSTRACTS, vol. 106, no. 26, 29.Juni 1987 Columbus, Ohio, US; abstract no. 218731t, KOSHIISHI KAZUMARO: "highly flammable heat-insulating materials" XP000064546 & JP,A,06 268 737 (NIPPON LIGHT METAL)
- CHEMICAL ABSTRACTS, vol. 104, no. 18, 5.Mai 1986 Columbus, Ohio, US; abstract no. 154681a, TAKADA IZUMI ET AL.: "mortar compositions" XP002011403 & JP,A,60 215 587 (KIKUSUI KAGAKU )
- DATABASE WPI Week 7646 Derwent Publications Ltd., London, GB; AN 76-86235x XP002011404 & JP,A,05 103 791 (MURAKOSHI)
- DATABASE WPI Week 8822 Derwent Publications Ltd., London, GB; AN 88-150048 XP002011405 & JP,A,63 089 447 (MITSUBISHI MINING, NIPPON BOKA LIGHT)
- DATABASE WPI Week 8329 Derwent Publications Ltd., London, GB; AN 83-714608 XP002011406 & JP,A,58 099 147 (MITSUI KENSETSU)

## Beschreibung

Gegenstand der vorliegenden Erfindung ist ein Material mit guten Brandschutzeigenschaften enthaltend ein abgebundenes Bindemittel, gegebenenfalls Füllstoffe und mindestens eine Komponente, die sich beim Erhitzen unter Energieverbrauch zersetzt sowie Verfahren zur Herstellung desselben.

Aufgrund der Erfahrung bei großen und kleinen Bränden ist das Bedürfnis nach Materialien mit guten Brandschutzeigenschaften ständig gestiegen. Insbesondere halogenierte Verbindungen in Kunststoff haben sich als nicht optimal erwiesen, da bei ihrer Verbrennung korrosive Gase bilden, die obendrein eine hohe Toxizität entwickeln können. Insbesondere bei Kunststoffen hat man daher versucht, die Brandschutzeigenschaften dadurch zu verbessern, daß man Substanzen wie Aluminiumhydroxid oder Magnesiumhydroxid zugemischt hat, die sich endothermisch zersetzen.

Bei den Brandschutzeigenschaften wird unterschieden zwischen Material, das unbrennbar ist. Dieses Material brennt auch nicht, wenn es dem Feuer ausgesetzt wird. Flammenresistentes Material kann nur schwierig entzündet werden, wenn es Hitze oder Flammen ausgesetzt ist. Sobald es jedoch brennt, brennt es weiter, da es nicht selbsterlöschend ist. Flammenretardierendes Material ist nicht nur schwierig zu entzünden, wenn es im offenen Feuer ausgesetzt wird, es erlischt auch wieder, wenn die Zündquelle entfernt wird. Es ist somit selbstlöschend. Brennbare Materialien sind hingegen solche, die brennen und weiterbrennen, wenn sie dem Feuer ausgesetzt sind. Um die Brandschutzeigenschaften von brennbaren Materialien zu verbessern, wird diesen daher nach Möglichkeit flammenretardierendes Material zugesetzt, um die Entflammbarkeit zu vermindern. Brennende Polymere weisen meist eine exotherme Dampfphasenreaktion in der Flamme auf, die in der Lage ist, diese Hitze erneut an das Polymere abzugeben und dadurch die feste Phase des Polymers in kleinere brennbare Fragmente aufzuspalten.

Brandschutzeigenschaften werden im allgemeinen ausgedrückt als Feuerresistenz des gesamten Bauelements. Diese verbesserten Brandschutzeigenschaften bewirken Sicherheit für die Menschen in einem Gebäude, geben der Feuerwehr ausreicnende Chancen, ein Feuer wirksam zu bekämpfen und begrenzen darüber hinaus den möglichen Schaden der durch ein Feuer entstehen kann.

Von einem Material mit guten Brandschutzeigenschaften wird eigentlich folgendes verlangt:
- Belastbarkeitskapazität: es ist die Fähigkeit auch einem Feuer ausgesetzt von einer oder mehrerer Seiten für eine ausreichende Zeit eine strukturelle Stabilität zu erhalten.
- Die Formbeständigkeit ist die Fähigkeit des Bauelements, dem Feuer mindestens von einer Seite ausgesetzt die Form zu behalten ohne dem Feuer oder den Flammen oder den heißen Gasen den Durchlaß zur anderen Seite zu ermöglichen, so daß auch die andere Seite zu brennen beginnt.
- Der Schutz gegen Wärmestrahlung beinhaltet die Fähigkeit, auf einer Seite hohen Temperaturen ausgesetzt zu sein und dabei möglichst wenig Hitze durch Strahlung durch das Bauelement hindurchtreten zu lassen, so daß die kalte Seite möglichst lange geschützt bleibt.
- Die Isolierkraft ist die Fähigkeit eines Bauelements auf einer Seite dem Feuer ausgesetzt zu sein, ohne daß durch Wärmeleitung durch das Element hindurch das Feuer von der heißen Seite zur kalten Seite gelangen kann, indem die kalte Seite sich entzündet. Dieses Material bildet somit eine ausreichende Barriere für die Hitze, so daß die Menschen in der Nähe dieses Bauelements eine ausreichende Zeit zur Flucht haben. Die mechanische Stabilität beinhaltet, daß das Element auch im Falle eines Feuers lange mechanisch stabil bleibt und somit in der Lage ist, die Struktur zu erhalten.
- Die Rauchdurchlässigkeit ist die Fähigkeit eines Elements das Durchströmen von heißen oder kalten Gasen oder Rauch von einer Seite auf die andere Seite zu begrenzen.

Die Feuerresistenz (Rf) eines Bauelements wird definiert durch die Zeit, in der diese Eigenschaften noch erhalten bleiben. Die Werte Rf 30, 60, 90, 120 besagen somit, daß ein solches Bauelement 30, 60, 90 oder 120 Minuten einem Feuer ausgesetzt werden kann, ohne die gewünschten Eigenschaften zu verlieren.

Die Messung dieser Eigenschaften erfolgt im allgemeinen nach DIN 4102 oder ISO 834. Dazu wird eine 20 mm starke Platte erhitzt und einer Einheitstemperaturzeitkurve (ETK) ausgesetzt, so wie sie diese Normen beschreiben. Die Temperatur der Oberfläche auf der kalten Seite der Platte wird gemessen. Die Feuerresistenz wird dann gemessen vom Beginn des Testes bis zu der Zeit, wo die Temperatur auf der kalten Seite 140°C über der Umgebungstemperatur erreicht. Die Feuerresistenz wird angegeben in Minuten.

Die DE-A-29 52 707 beschreibt einen Abbindebeschleuniger für Zement und Beton auf Basis von Aluminiumverbindungen, nämlich einem Aluminiumphosphat mit einem molaren Verhältnis Al₂O₃ : P₂O₅ wie 1,5 : 3, wobei gegebenenfalls noch Natriumaluminate zugemischt werden können. Diese Abbindebeschleuniger werden in Mengen von 0,5 bis 5 % bezogen auf Zement eingesetzt.

Die DE-A-35 27 979 beschreibt eine schnellhärtende Mörtelmischung für Putze von Dämmsystemen. Dieses Material bildet bei der Abbindung auch Ettringit, der nadelförmig und langprismatisch ausgebildet ist. Dieser Ettringit soll eine Volumenexpansion bewirken und somit dem Schwinden des Materials entgegenwirken. Es finden sich keine Hinweise auf die Menge des gebildeten Ettringits. Auch finden sich hierin keine Hinweise darauf, daß diese Mörtelmischung im abgebundenen Zustand ein Material mit guten Brandschutzeigenschaften liefert.

Weitere Herstellungsmethoden für Ettringit, insbesondere für Ettringitfasern finden sich in der FR-A-73 40026, GB-B-1 542 221, GB-B-1 506 417 und US-A-4,255,398, und zwar durch Verwendung von Gemischen aus Tonerdeschmelzzement und Calciumsulfaten.

Die Erfindung hat sich die Aufgabe gestellt, ein Material mit guten Brandschutzeigenschaften zu entwickeln, welches ein Bindemittel, gegebenenfalls Füllstoffe und mindestens eine Komponente enthält, die sich beim Erhitzen unter Energieverbrauch zersetzt. Dabei soll dieses Material möglichst weitgehend die oben genannten Anforderungen erfüllen. Es soll weiterhin möglichst leicht sein und nach Möglichkeit eine Dichte unter 1 g/cm³ aufweisen. Es genügt somit nicht, daß sich das Material beim Erhitzen unter Energieverbrauch zersetzt, da dann eine Reihe von anderen gewünschten Eigenschaften nicht erfüllt sind. Insbesondere ist darauf zu achten, daß das Material gute mechanische Eigenschaften gegen Druck und Biegung aufweist und daß es gut verarbeitbar ist und deshalb bei der Verarbeitung leicht genagelt, verschraubt, geschnitten und gestapelt werden kann. Die einzelnen Komponenten müssen in sich verträglich sein, um damit auch eine Langzeithaltbarkeit zu gewährleisten. Während des Feuertestes darf das Material sich nicht verwerfen oder schrumpfen, es darf nicht splittern oder brechen, es darf nicht zerblättern, weil all dies dazu führen würden, daß entflammbare Gase durch diese Barriere hindurch kommen können. Das Material darf sich nicht plötzlich zersetzen, es darf nicht selbst toxische Gase oder Rauch entwickeln und es dürfen von seiner Oberfläche keine gefährlichen Splitter abspringen. Diese Aufgabe wird gelöst durch das Material gemäß Anspruch 1 und das Verfahren gemäß Anspruch 5.

Eingehende Untersuchungen der Anmelderin haben ergeben, daß von den Substanzen, die beim Erhitzen unter Energieverbrauch zersetzt werden nur sehr wenige die oben gestellten Forderungen erfüllen. Von den bisher zur Anwendung gekommenen Substanzen hat sich Calciumsulfatdihydrat, d.h. Gips schon als recht gut erwiesen, während die vielfach verwendeten Substanzen wie Aluminiumhydroxid und Magnesiumhydroxid deutlich schlechtere Eigenschaften aufweisen, da sie sich erst bei Temperaturen über 300° C ausreichend rasch zersetzen. Calciumsulfatdihydrat entwickelt seine flammschützende Eigenschaft aber auch erst ab ca. 130° C. Überraschend gute Ergebnisse werden hingegen erzielt, wenn dieses Material mindestens 5 Gew.-% Ettringit und/oder Aluminiumphosphat oder Gemische derselben enthält, wobei das Material gegebenenfalls zusätzlich auch Calciumaluminiumhydrat und/oder Calciumsulfatdihydrat enthält. Kombinationen und Gemische dieser Substanzen führen zu überraschend guten Ergebnissen.

Es wurde weiterhin gefunden, daß es durchaus möglich ist, Ettringit in vorgefertigter Form einzusetzen, wobei dieser Ettringit je nach Herstellungsmethode zusätzlich Calciumaluminiumhydat und/oder Calciumsulfatdihydrat enthalten kann. Weiterhin ist es erfindungsgemäß durchaus möglich, dem Bindemittel und den gegebenenfalls zugemischten Füllstoffen Wasser und reaktive Substanzen zuzumischen, die Calciumionen, Aluminiumionen, Hydroxylionen und Sulfationen zur Verfügung stellen und daher in der Lage sind, in situ mindestens 5 Gew.-% Ettringit zu bilden. Diesen Gemischen kann gegebenenfalls auch vorgefertigtes Aluminiumphosphat zugesetzt werden. Weiterhin können die Bedingungen so gewählt werden, daß die Bindemittel Substanzen enthalten, die unter Verbrauch von Wasser außer Ettringit auch Calciumaluminiumhydrat und/oder Calciumsulfatdihydrat bilden.

Bei einer bevorzugten Ausführungsform der Erfindung wird der Ettringit vorgefertigt und enthält je nach Verfahrensbedingungen mehr oder weniger Calciumaluminiumhydrat und/oder Calciumsulfatdihydrat. Dieser vorgefertigte Ettringit kann in Form einer wäßrigen Aufschlämmung oder als halbtrockenes Pulver oder als getrocknetes Pulver zur Herstellung des erfindungsgemäßen Materials verwendet werden. Es handelt sich somit um ein sehr wertvolles Zwischenprodukt, welches erfindungsgemäß verwendet werden kann.

Aluminiumphosphat ist eine Verbindung, die in der Praxis nur in vorgefertigter Form zugesetzt werden kann. Aluminiumphosphat ist eine mehr oder weniger amorphe Verbindung, die wechselnde Mengen Wasser einschließt. Auch dieses Wasser wird bei Temperaturen über 110°C abgegeben und trägt zu den guten Brandschutzeigenschaften bei. Eine bevorzugte Form des Aluminiumphosphats ist Metavariscite mit der Zusammensetzung AlPO₄. n H₂O (n ist variabel).

Eine weitere bevorzugte Variante des erfindungsgemäßen Verfahrens besteht darin, daß Füllstoffe verwendet werden, die ihrerseits in der Lage sind zur Bildung von Ettringit beizutragen. Für die Bildung von Ettringit ist es notwendig, daß Calciumionen, Aluminiumionen, Hydroxylionen und Sulfationen zur Verfügung stehen und eine ausreichende Menge an Wasser, da ein Molekül Ettringit 32 Mol Wasser bindet. Zu derartigen Füllstoffen zählt Metakaolin, welches vor allem Aluminiumionen zur Verfügung stellen kann. Tonerdezement ist einerseits ein Bindemittel, welches beim Abbinden mit Wasser vor allem Calciumaluminiumhydrat bildet. In Gegenwart von Sulfationen wie Calciumsulfatdihydrat entstehen ebenfalls erhebliche Mengen an Ettringit. Gemische aus Tonerdezement und Gips sind daher prinzipiell geeignet, als Bindemittel und Füllstoffe verwendet zu werden, die zusammen Ettringit bilden. Der dabei gebildete Ettringit kann gegebenenfalls auch noch zur Festigkeit des Endproduktes beitragen. Da diese Abbindereaktion relativ rasch abläuft, ist es durchaus möglich, daß derartige Produkte neben Ettringit auch noch erhebliche Mengen an Calciumaluminiumhydrat und/oder Calciumsulfatdihydrat enthalten, ohne daß es dabei zu einer vollständigen Umsetzung zum Ettringit gekommen ist. Die so erhaltenen erfindungsgemäßen Materialien weisen trotzdem sehr gute Eigenschaften auf.

Die bevorzugte Methode zur Herstellung von erfindungsgemäß einsetzbarem Ettringit ist die Umsetzung von Aluminiumsulfat mit Calciumhydroxid. Hierbei entsteht eine wäßrige Aufschlämmung, die entweder direkt eingesetzt werden kann oder als halbtrockenes Produkt oder als getrocknetes Pulver zur Herstellung des erfindungsgemäßen Materials mit guten Brandschutzeigenschaften eingesetzt werden kann.

Optimale Brandschutzeigenschaften und höchste Feuerresistenz erhält man durch Zumischung von synthetischem Xonotlit in Mengen von mehr als 3 Gew.-%. In größeren Mengen wirken die Kugeln aus Xonotlit auch als Bindemittel, da sie sich beispielsweise beim Filterpressverfahren verfilzen.

Das erfindungsgemäße Material wird vorzugsweise zu vorgefertigten Platten verarbeitet oder aber nachträglich auf die gegen Feuer zu schützende Bauteile aufgetragen, wo es als Schicht mit guten Brandschutzeigenschaften verbleibt. Als Bindemittel werden vor allem anorganische Bindemittel verwendet, da zumindest größere Mengen organischer Bindemittel die Brandschutzeigenschaften verschlechtern. Als anorganische Bindemittel kommen somit insbesondere in Frage Portlandzement, Tonerdeschmelzzement, ciment fondu Lafarge, Hochofenschlackenzement, Silikatgele, wie sie aus pozzulanischen Materialien und Kalkhydrat entstehen, z.B. amorphe Kieselsäuren, Flugaschen und gemahlene Aschen. Weiterhin kommen in Frage Magnesiumzement, Aluminiumphosphatbinder und Alkalisilikate. In situ gebildete Aluminiumphosphate können somit genau wie in situ gebildeter Ettringit auch zugleich als Bindemittel wirken. Die Bindemittel werden meist nur in Mengen bis zu ca. 15 Gew.-%, vorzugsweise 3 bis 6 Gew.-% benötigt. Synthetischer Xonotlit in Kugelform wirkt in größeren Mengen ebenfalls als Bindemittel, da sich die Kugeln beispielsweise beim Filterpressverfahren mechanisch miteinander verfilzen und den Platten ausreichende mechanische Festigkeit verleihen. Es kann dann sogar auf den Zusatz weiterer Bindemittel verzichtet werden.

Die mechanischen Eigenschaften des erfindungsgemäßen Materials können durch anorganische oder organische Fasern als Füllstoffe verbessert werden. Weitere bevorzugte Füllstoffe sind Schaum und/oder Leichtfüllstoffe, die zur Porenbildung beitragen und damit die Dichte des Materials herabsetzen.

Der Schaum kann entweder extern vorgefertigt und eingemischt werden oder aber in situ im Material erzeugt werden.

Als Leichtfüllstoffe kommen in Frage geblähte Perlite, geblähte Vermiculite, synthetischer Xonotlit, Blähton und gewisse Flugaschen. Einige dieser Komponenten können dabei durchaus im gewissen Umfang zur Bildung von Ettringit und/ oder Calciumaluminiumhydrat beitragen und somit die Brandschutzeigenschaften verbessern.

Das erfindungsgemäße Material und seine Herstellung sind in den nachfolgenden Beispielen näher erläutert.

### Beispiel 1

a) Herstellung von vorgefertigtem Ettringit (Zwischenprodukt)
   60 Teile Aluminiumsulfathydrat (Al₂(SO₄)₃.18H₂O) werden mit 40 Gew.-Teilen Calciumhydroxid umgesetzt. Dazu werden 100 Gew.- Teile Wasser auf 60°C erhitzt und zunächst das Aluminiumsulfat hierin gelöst. Es wird dann unter ständigem Rühren innerhalb einer Stunde bei 60°C das Calciumhydroxid eingerührt. Es entsteht eine wäßrige Aufschlämmung, die entweder direkt verwendet werden kann oder aber durch Zentrifugieren oder Filtrieren von der Hauptmenge des Wassers befreit wird. Bei 50°C kann dieses Material getrocknet werden, beispielsweise in einem belüfteten Trockner bis hieraus ein halbtrocknes oder trocknes Produkt entstanden ist, welches gut lager- und transportfähig ist.
b) Herstellung eines Materials mit guten Brandschutzeigenschaften unter Verwendung von vorgefertigtem Ettringit.
   Synthetischer Xonotlit hergestellt in einem hydrothermalen Syntheseverfahren in einem gerührten Reaktor (vgl. Einleitung der EP 0 231 460) werden wie folgt umgesetzt: 60 Gew.-Teile Xonotlit werden mit 10 Teilen Bentonit-Suspension und 2 - Teilen Cellulosefasern aufgeschlämmt sowie 3 Teilen Glasfasern. Es werden 15 Teile Trockengewicht des Ettringits zugesetzt und das Gemisch 15 Minuten gerührt. Es werden dann 10 Teile Portlandzement zugegeben und das Gemisch 2 Minuten gerührt. Das Gemisch wird in die Form einer Filterpresse gegeben und hieraus eine 20 mm dicke Platte mit einer Dichte (getrocknet) von 450 kg/m³ erzeugt. Die Platte wird bei 50° C in einem belüfteten Ofen getrocknet.

Zum Vergleich wurde eine Platte hergestellt aus 75 Teilen Xonotlit, 10 Teilen Bentonit, 2 Teilen Cellulose, 3 Teilen Glasfaser und 10 Teilen Zement (es fehlt somit der Anteil von 15 Gew.-Teilen Ettringit). Auch dieses Gemisch wurde entsprechend zu einer Platte verarbeitet. Die Eigenschaft der 20 mm starken Platten wurde gemessen. Die Dichte betrug in beiden Fällen 450 kg/m³, die Feuerbeständigkeit stieg hingegen von 18,3 Minuten auf 23,8 Minuten. Die Feuerbeständigkeit wurde gemessen nach DIN 4102 und ISO 834 mittels der Einheitstemperaturzeitkurve (ETK). Gemessen wurde die Zeit bis die kalte Seite 140° C heißer als die Umgebungstemperatur geworden war.

### Beispiel 2

48,6 Teile Xonotlit, 2,8 Glasfasern und 48,6 Teile Ettringit, hergestellt gemäß Beispiel 1, wurden 15 Minuten gerührt und in einer Form einer Filterpresse gegossen. Die Presse war in der Lage, hieraus eine 20 mm dicke Platte mit einer Dichte (trocken) von 450 kg/m³ herzustellen. Die Platte wurde getrocknet bei 50° C in einem belüfteten Trockner. Im Vergleich wurde eine Platte hergestellt aus 97,2 Teilen Xonotlit und 2,8 Teilen Glasfaser. Die Feuerbeständigkeit stiegt von 21,7 Minuten auf 39,6 Minuten.

### Beispiel 3

Eine Mischung aus Calciumhydroxid, Aluminiumzement und einer Aufrührung von Xonotlit-Partikeln und Wasser wird zwei Minuten gerührt. Calciumsulfathalbhydrat wird der Mischung eingerührt innerhalb einer Minute. Die Mischung wird in einer Form gegossen. Die Form härtete während 24 Stunden bei 80° C aus, bei einer Feuchtigkeit von 90 %. Sie wurde dann bei 50° C bis zur Gewichtskonstanz getrocknet.

| Zusammensetzung | Gew.-% | Gew.-% |
|---|---|---|
| Xonotlite (Fülldichte 90 g/l) | 8,5 | 3,1 |
| Aluminiumzement (Secar 71) | 3,0 | 5,5 |
| Calciumsulfathalbhydrat | 10,8 | 20,0 |
| Calciumhydroxid | 4,7 | 8,6 |
| Wasser | 73,0 | 62,8 |
| Eigenschaften der 20 mm dicken Platte | | |
| Dichte (kg/m³) | 410 | 640 |
| Feuerbeständigkeit (Rf-Wert in Minuten) | 47 | 52 |

### Beispiel 4

Aluminiumphosphat (Metavariscite) wird hergestellt durch Kochen eines Gemisches von Pseudobhoemit und Phosphorsäure (85 %) während drei bis sechs Stunden. Die Mengen an Pseudobhoemit und Phosphorsäure sind so aufeinander abgestimmt, daß eine Zusammensetzung von AlPO4. n H₂O (n ist variabel) entsteht (Metavariscite); vgl. F. D'YVOIR Bull. Soc. Chim. Fr. (1961) 1762 bis 1776. Der Niederschlag wird durch Filtration abgetrennt und einer Calciumsilicatmischung zugemischt, die folgende Zusammensetzung hat 60 % Xonotlit, 10 % Bentonit, 2 % Cellulose, 3 % Glasfasern, 10 % Portlandzement und 15 % Metavariscite. Die Mischung wird gerührt und wie im Beispiel 1 zu einer 20 mm dicken Platte geformt. Die Feuerbeständigkeit beträgt 20 Minuten gegenüber einer gleichen Platte ohne Zusatz von Metavariscite, die nur den Wert 17 Minuten zeigt.

### Beispiel 5

48,6 Teile Xonotlit, 2,8 Glasfasern, 12,8 Teile Aluminiumzement ("ciment fondu Lafarge") und 35,8 Teile Ettringit, hergestellt gemäß Beispiel 1, wurden 15 Minuten gerührt und in einer Form einer Filterpresse gegossen. Die Presse war in der Lage, hieraus eine 20 mm dicke Platte mit einer Dichte (trocken) von 450 kg/m³ herzustellen. Die Platte wurde getrocknet bei 50 C in einem belüfteten Trockner. Im Vergleich wurde eine Platte hergestellt aus 97,2 Teilen Xonotlit und 2,8 Teilen Glasfaser. Die Feuerbeständigkeit stiegt von 21,7 Minuten auf 39,9 Minuten.

| Eigenschaften der 20 mm dicken Platte | | |
|---|---|---|
| Dichte (kg/m3) | 410 | 640 |
| Feuerbeständigkeit (Rf-Wert in Minuten) | 47 | 52 |

### Beispiel 6

Aluminiumphosphat (Metavariscite) wird hergestellt durch Kochen eines Gemisches von Pseudobhoemit und Phosphorsäure (85 %) während drei bis sechs Stunden. Die Mengen an Pseudobhoemit und Phosphorsäure sind so aufeinander abgestimmt, daß eine Zusammensetzung von AlPO₄. n H₂O (n ist variabel) entsteht (Metavariscite); vgl. F. D'YVOIR Bull. Soc. Chim. Fr. (1961) 1762 bis 1776. Der Niederschlag wird durch Filtration abgetrennt und einer Calciumsilicatmischung zugemischt, die folgende Zusammensetzung hat 60 % Xonotlit, 10 % Bentonit, 2 % Cellulose, 3 % Glasfasern, 10 % Portlandzement und 15 % Metavariscite. Die Mischung wird gerührt und wie im Beispiel 1 zu einer 20 mm dicken Platte geformt. Die Feuerbeständigkeit beträgt 20 Minuten gegenüber einer gleichen Platte ohne Zusatz von Metavariscite, die nur den Wert 17 Minuten zeigt.

### Beispiel 7

48,6 Teile Xonotlit, 2,8 Glasfasern, 12,8 Teile Aluminiumzement ("ciment fondu Lafarge") und 35,8 Teile Ettringit, hergestellt gemäß Beispiel 1, wurden 15 Minuten gerührt und in einer Form einer Filterpresse gegossen. Die Presse war in der Lage, hieraus eine 20 mm dicke Platte mit einer Dichte (trocken) von 450 kg/m³ herzustellen. Die Platte wurde getrocknet bei 50°C in einem belüfteten Trockner. Im Vergleich wurde eine Platte hergestellt aus 97,2 Teilen Xonotlit und 2,8 Teilen Glasfaser. Die Feuerbeständigkeit stiegt von 21,7 Minuten auf 39,9 Minuten.

## Patentansprüche

1. Material in Form von vorgefertigten Platten oder als nachträglich auf zu schützende Bauteile aufgetragene Beschichtung mit guten Brandschutzeigenschaften enthaltend ein Bindemittel, synthetischen Xonotlit und mindestens 5 Gew.-% Ettringit und/oder Metavariscite.

2. Material gemäß Anspruch 1, dadurch gekennzeichnet, daß es zusätzlich Calciumaluminathydrat und/oder Calciumsulfatdihydrat enthält.

3. Material gemäß einem der Ansprüche 1 oder 2, dadurch gekennzeichnet, daß es als Füllstoff zusätzlich anorganische oder organische Fasern enthält.

4. Material gemäß einem der Ansprüche 1 bis 3, dadurch gekennzeichnet, daß es durch Schaum und/oder Leichtfüllstoffe erzeugte Poren aufweist.

5. Verfahren zur Herstellung von Material in Form von vorgefertigten Platten oder als nachträglich auf zu schützende Bauteile aufgetragene Beschichtung mit guten Brandschutzeigenschaften enthaltend ein Bindemittel, synthetischen Xonotlit und mindestens 5 Gew.-% Ettringit und/oder Metavariscite, in dem man entweder
a) dem Bindemittel mindestens 5 Gew.-% von vorgefercigtem Ettringit oder Metavariscite oder Gemische derselben zumischt und man das Gemisch abbinden läßt oder
b) dem Bindemittel Wasser, Metavariscite und/oder reaktive Substanzen zumischt, die Calciumionen, Aluminiumionen, Hydroxylionen und Sulfationen zur Verfügung stellen und daher in der Lage sind, in situ mindestens 5 Gew.-% Ettringit zu bilden, und man das Gemisch abbinden läßt.

6. Verfahren gemäß Anspruch 5, dadurch gekennzeichnet, daß entweder Calciumaluminathydrat und/oder Calciumsulfatdihydrat zugemischt werden oder das Bindemittel Substanzen enthält, die unter Verbrauch von Wasser Calciumaluminathydrat und/oder Calciumsulfatdihydrat bilden.

## Claims

1. A material in the form of pre-fabricated plates or as a coating subsequently applied to constructional elements to be protected having good fire-protection properties and containing a binder, synthetic xonotlite and at least 5 % by weight of ettringite and/or metavariscite.

2. The material according to claim 1, characterized in that it additionally contains calcium aluminate hydrate and/or calcium sulfate dihydrate.

3. The material according to any one of claims 1 or 2, characterized in that it additionally contains inorganic or organic fibres as a filler.

4. The material according to any one of claims 1 to 3, characterized in that it contains pores originating from foam and/or light-weight fillers.

5. A process for manufacturing a material in the form of pre-fabricated plates or as a coating subsequently applied to constructional elements to be protected having good fire-protection properties and containing a binder, synthetic xonotlite and at least 5 % by weight of ettringite and/or metavariscite by either
a) admixing at least 5 % by weight of pre-fabricated ettringite or metavariscite or mixtures thereof to the binder and allowing the mixture to set or
b) admixing water, metavariscite and/or reactive substances which provide calcium ions, aluminium ions, hydroxy ions, and sulfate ions and therefore are capable of binding in situ at least 5 % by weight of ettringite to the binder and allowing the mixture to set.

6. The process according to claim 5, characterized in that either calcium aluminate hydrate and/or calcium sulfate dihydrate are admixed or the binder contains substances which produce calcium aluminate hydrate and/or calcium sulfate dihydrate with the consumption of water.

## Revendications

1. Matériau sous forme de plaques préfabriquées ou d'un revêtement appliqué après-coup sur des composants à protéger, présentant de bonnes propriétés ignifuges, contenant un liant, de la xonotlite synthétique et au moins 5 % en poids d'ettringite et/ou de métavariscite.

2. Matériau selon la revendication 1, caractérisé en ce qu'il contient en outre de l'aluminate de calcium hydraté et/ou du sulfate de calcium dihydraté.

3. Matériau selon l'une des revendications 1 ou 2, caractérisé en ce qu'il contient encore, en tant que matière de charge, des fibres inorganiques ou organiques.

4. Matériau selon l'une des revendications 1 à 3, caractérisé en ce qu'il comporte des pores produits par de la mousse et/ou des matières de charge légères.

5. Procédé de fabrication d'un matériau sous forme de plaques préfabriquées ou d'un revêtement appliqué après-coup sur des composants à protéger, ayant de bonnes propriétés ignifuges, contenant un liant, de la xonotlite synthétique et au moins 5 % en poids d'ettringite et/ou de métavariscite, dans lequel
a) on ajoute au liant au moins 5 % en poids d'ettringite ou de métavariscite préfabriquée, ou des mélanges de ces dernières, et on laisse prendre le mélange, ou bien
b) on ajoute au liant de l'eau, de la métavariscite et/ou des substances réactives qui mettent à disposition des ions calcium, des ions aluminium, des ions hydroxyle et des ions sulfate, et qui de ce fait sont à même de former in situ au moins 5 % en poids d'ettringite, et on laisse prendre le mélange.

6. Procédé selon la revendication 5, caractérisé en ce qu'on ajoute de l'aluminate de calcium hydraté et/ou du sulfate de calcium dihydraté, ou bien en ce que le liant contient des substances qui, par consommation d'eau, forment de l'aluminate de calcium hydraté et/ou du sulfate de calcium dihydraté.
